Europäisches Patentamt

European Patent Office

Office européen des brevets

(11) Numéro de publication : **0 284 487 B1**

(12) **FASCICULE DE BREVET EUROPEEN**

(45) Date de publication du fascicule du brevet :
04.12.91 Bulletin 91/49

(51) Int. Cl.⁵ : **F16C 39/06**

(21) Numéro de dépôt : 88400586.9

(22) Date de dépôt : 11.03.88

(54) Palier magnétique pour le centrage actif, selon au moins un axe, d'un corps mobile selon un autre corps.

(30) Priorité : 13.03.87 FR 8703489

(43) Date de publication de la demande :
28.09.88 Bulletin 88/39

(45) Mention de la délivrance du brevet :
04.12.91 Bulletin 91/49

(84) Etats contractants désignés :
AT BE CH DE ES FR GB GR IT LI LU NL SE

(56) Documents cités :
EP-A- 0 191 225
FR-A- 2 257 815
GB-A- 836 800
US-A- 4 077 678
PATENT ABSTRACTS OF JAPAN, vol. 7, no.
215 (M-244)[1360], 22 septembre 1983; & JP-
A-58 109 719 (HITACI SEISAKUSHO K.K.) 30-
06-1983

(73) Titulaire : **AEROSPATIALE Société Nationale**
**Industrielle**
**37, Boulevard de Montmorency**
**F-75781 Paris Cédex 16 (FR)**

(72) Inventeur : **Vaillant de Guelis, Hubert**
**16 Allée Edith Piaf**
**F-78410 Aubergenville (FR)**
Inventeur : **Roland, Jean-Pierre**
**Route Vallée du Roi Vienne en Arthie**
**F-95510 Vetheuil (FR)**
Inventeur : **Jamain, Patrice**
**92 Côte de Beulle**
**F-78580 Maule (FR)**

(74) Mandataire : **Rinuy, Santarelli**
**14, avenue de la Grande Armée**
**F-75017 Paris (FR)**

Jouve, 18, rue Saint-Denis, 75001 PARIS

## Description

La présente invention concerne un palier magnétique pour la centrage magnétiquement actif, selon au moins un axe de centrage perpendiculaire à un axe de référence, d'un corps mobile par rapport à un autre corps.

On a déjà proposé des paliers magnétiques ou des dispositifs de suspension magnétique adaptés à s'intégrer dans des systèmes comportant des pièces en mouvement relatif, entre lesquelles une absence de contact est requise.

Les mouvements relatifs sont le plus souvent des rotations mais peuvent aussi être des translations. De manière générale les paliers connus comportent des moyens identiques de centrage selon deux axes perpendiculaires à un axe de rotation.

Les dispositifs de suspension magnétique sont tout particulièrement recommandés pour des systèmes tournants nécessitant :
— une vitesse de rotation élevée,
— une grande fiabilité,
— une grande précision de positionnement dans le plan perpendiculaire à l'axe de rotation,
— une grande stabilité de vitesse de rotation,
— une faible consommation d'énergie.

On sait depuis longtemps (EARNSHAW en 1842) qu'il est impossible d'obtenir une suspension magnétique stable par la simple utilisation de champs statiques : il faut donc associer à des champs magnétiques statiques (aimants permanents) un minimum d'énergie (électrique, électrostatique...) pour permettre la suspension d'un corps.

La Demanderesse a développé en 1974 un dispositif de suspension magnétique (brevets Français FR-A-2257077 et FR-A-2294430) dans lequel un corps flottant tournant possède un degré de liberté piloté par un servomécanisme tandis que ses autres degrés de liberté sont stabilisés par des aimants permanents.

Ces systèmes étaient systèmes découplés. Des travaux ultérieurs ont permis de réaliser des systèmes intégrés donc simplifiés, conduisant à une plus grande fiabilité.

On connaît ainsi plusieurs dispositifs de suspension magnétique possédant deux degrés de liberté contrôlés activement et trois degrés de liberté contrôlés passivement. Ils ont trait à la suspension de rotors pour lesquels on souhaite le plus souvent une masse, et donc une inertie, importante.

Le brevet US-A-4.285.553 (ROBINSON) propose un système dont le rotor porte une couronne d'aimants et le stator comporte des anneaux polaires internes plats, reliés par une paroi ferromagnétique cylindrique. Des bobines électriques sont placées sur cette dernière paroi cylindrique afin d'éviter la discontinuité des pièces polaires et de minimiser les courants de Foucault. Les lignes d'induction créées par une paire de bobines diamétralement opposées, alimentées simultanément, circulent dans les anneaux polaires du rotor sur un demi périmètre et se referment par la paroi cylindrique du stator en deux zones diamétralement opposées en regard des bobines. Ces lignes de champ rencontrent donc quatre fois l'entrefer entre pièces polaires ce qui conduit à des pertes d'induction importantes. Certaines lignes d'induction se referment après seulement un quart de périmètre en traversant les entrefers au niveau d'une autre paire de bobines destinée au pilotage d'un deuxième axe de centrage, ce qui conduit à des intéractions entre les axes d'asservissement, difficiles à maitriser pour la stabilité du système.

Le brevet US-A-4.077.678 (STUDER) décrit un dispositif de stockage d'énergie à roue d'inertie dont la suspension de type magnétique regroupe sur le stator des moyens passifs de centrage axial et des moyens actifs de centrage radial. Des aimants permanents situés au lieu et place des noyaux des bobines entraînent une perte d'efficacité considérable des servo-mécanismes. Si l'on souhaite augmenter les raideurs axiales et radiales dues aux aimants en augmentant leur volume, il faut augmenter le volume des bobines dont les spires en regard de l'aimant sont pourant totalement inefficaces, puisqu'elles ont pour noyau un aimant permanent.

Ce dispositif de stockage d'énergie décrit également l'association d'une bobine d'une part et d'un aimant d'autre part disposés axialement en parallèle entre deux portions annulaires ferromagnétiques, mais cette bobine et cet aimant coopèrent non pas dans une suspension mais dans un moteur/générateur, la fonction de suspension étant, elle, toujours obtenue par une bobine entourant un aimant.

Le brevet US-A-4.043.614 (LYMAN) décrit un dispositif où le stator comporte un disque épais aimanté perpendiculaire à l'axe de rotation, axialement enserré entre deux disques polaires de diamètre légèrement supérieur à celui du disque de manière à pouvoir recevoir sur leur périphérie deux paires de bobines électriques diamétralement opposées. Le rotor, situé autour du stator, comporte une couronne aimantée axialement en sens inverse du disque et enserrée entre deux anneaux polaires plats. Le principal inconvénient de ce dispositif est lié à l'absence de trajet perméable au flux magnétique entre les pièces polaires portant les bobinages, ce qui limite sensiblement leur efficacité.

Le brevet US-A-4.294.493 (SINDLINGER) décrit un dispositif de suspension magnétique qui a les mêmes inconvénients que celui décrit dans le brevet 4.043.614. Le volume des bobinages est très important ce qui entraîne un stator considérable en masse par rapport au rotor.

Le brevet FR-A-2.524.090 déposé par la Demanderesse, pallie les inconvénients des brevets précédents. Il propose un dispositif dans lequel, ne rencontrant pour l'essentiel que la reluctance de deux entrefers, les lignes d'induction ont un trajet très court situé dans un plan contenant l'axe de rotation. La faible longueur de ce trajet pallie les fuites d'induction. Par ailleurs, aucune interaction parasite n'est à craindre entre les paires de secteurs associées à des axes différents. Cependant dans cette suspension, la partie suspendue magnétiquement (rotor) comporte un aimant permanent, ce qui enlève toute possibilité de vitesse de rotation très élevée préjudiciable à la tenue mécanique de la couronne d'aimant. De plus les applications dans lesquelles le corps tournant est situé dans un milieu à atmosphère raréfiée ou corrosive sont difficiles à mettre en oeuvre. A noter aussi que le circuit polaire des bobines présente des discontinuités ayant pour conséquence des pertes en rotation dues au courants de Foucault ainsi générés.

On connaît par ailleurs le brevet US-A-4.000.929 (STUDER) qui décrit un palier magnétique pour la suspension d'un anneau ; ce palier comporte un aimant central aimanté axialement enserré entre des plaques ferromagnétiques se prolongeant selon des diamètres respectivement croisés, par des ailes autour desquelles sont enroulées des bobines et dont les tranches extrêmes définissent un entrefer unique avec l'anneau. Les flux circulant dans une paire d'ailes se referment au travers de l'autre paire d'ailes, ce qui établit un centrage radial de l'anneau. Un tel palier, très difficile à réaliser, a pour gros inconvénient que son mode d'action est fondé sur un couplage des deux axes d'asservissement.

L'invention a pour objet de pallier les inconvénients précités et propose à cet effet un palier magnétique pour le centrage magnétiquement actif selon au moins un axe de centrage X-X, perpendiculaire à un axe de référence Z-Z, d'un corps B mobile par rapport à un autre corps A (par exemple un stator), comportant de chaque côté d'un plan de symétrie perpendiculaire à l'axe de centrage et contenant l'axe de référence :

— au moins un aimant permanent aimanté parallèlement à l'axe de référence,

— au moins une bobine enroulée autour d'un noyau ferromagnétique orienté parallèlement à l'axe de référence,

— des pièces ferromagnétiques adaptées à refermer sur eux-mêmes des flux générés par l'aimant et la bobine au travers d'entrefers séparant, le long de l'axe de centrage, ladite pièce mobile par rapport audit autre corps,

ce palier comportant en outre un circuit électrique de commande comportant un détecteur sensible à un décalage du corps mobile par rapport audit autre corps selon cet axe de centrage et adapté à fournir à au moins l'une des bobines un courant tendant à compenser ce décalage, étant caractérisé en ce que :

— l'aimant et le noyau autour duquel est enroulée la bobine sont enserrés entre deux plaques ferromagnétiques portées par ledit autre corps tandis que le corps mobile porte une pièce ferromagnétique polaire adaptée à refermer sur eux-mêmes au travers desdits entrefers les flux magnétiques circulant dans les plaques ferromagnétiques,

— une cale statique non-ferromagnétique formant entrefer est disposée entre le noyau ferromagnétique de la bobine et l'une des plaques ferromagnétiques l'enserrant.

On appréciera qu'un tel palier magnétique permet effectivement d'éliminer tous les inconvénients cités à propos des brevets antérieurs précités. En effet :

— l'ensemble stator comporte à la fois les aimants permanents permettant de créer les raideurs passives et les bobines effectuant l'asservissement électromagnétique de la partie suspendue selon l'axe de centrage,

— dans le cas de deux axes croisés de centrage, les circuits magnétiques et électromagnétiques de ces axes de suspension sont totalement découplés magnétiquement, ce qui a pour effet de faciliter considérablement le traitement des signaux des circuits électroniques de commande,

— les pièces polaires, par lesquelles circulent les flux variables générés par les bobines, lesquelles sont en regard l'une de l'autre au niveau des entrefers, ne présentent pas de discontinuité ce qui entraîne des courants de Foucault minimum,

— mécaniquement, le palier de la présente invention est le plus intégré et le plus simple qui soit ; sa miniaturisation est en particulier très aisée.

Il est bien entendu que les rôles des deux corps énoncés dans la précédente définition de l'invention peuvent être inversés.

La présence de la cale statique non-ferromagnétique entre le noyau ferromagnétique de la bobine et l'une des plaques ferromagnétiques l'enserrant a pour effet d'éviter que le flux généré par l'aimant ne passe que par le noyau de la bobine.

Selon une disposition préférée de l'invention la pièce polaire du corps mobile comporte des saillies en créneau orientées parallèlement à l'axe de centrage, de même épaisseur et de même écartement que les plaques ferromagnétiques enserrant l'aimant et le noyau de la bobine, ce qui permet d'effectuer un centrage magnétique passif du corps mobile par rapport à l'autre corps selon l'axe de référence. Il en résulte un centrage du corps mobile par rapport à l'autre corps dans un plan perpendiculaire à l'axe de référence, ce centrage étant passif selon un axe et actif selon un axe perpendiculaire.

De manière préférée, ledit aimant se décompose en une pile d'aimants superposés en nombre impair dont les sens d'aimantation alternent et qui sont séparés par des plaques ferromagnétiques intermédiaires ; la pièce polaire du corps mobile comporte des saillies intermédiaires en créneau disposées en regard de la tranche de ces plaques ferromagnétiques intermédiaires en sorte de déterminer des entrefers intermédiaires. Cette disposition combinée à la précédente, permet d'augmenter les raideurs radiale et axiale du palier sans avoir à doubler ce dernier.

De manière préférée l'aimant est disposé entre le noyau ferromagnétique portant la bobine et la pièce polaire du corps mobile.

En vue d'un premier type d'application dans lequel l'axe de référence du palier constitue un axe de rotation pour le corps mobile, l'aimant fait partie d'une couronne centrée sur cet axe tandis qu'au moins deux autres bobines, entourant deux autres noyaux, sont disposées selon un troisième axe perpendiculaire à l'axe de référence en vue, par coopération avec ladite couronne, du centrage magnétique actif du corps mobile selon ce troisième axe. Dans une première configuration le corps mobile comporte un arbre disposé à l'intérieur de l'autre corps tandis que, dans une autre configuration, le corps mobile comporte une couronne entourant ledit autre corps.

En vue d'un second type d'application dans lequel le corps mobile est destiné à se déplacer en translation perpendiculairement à l'axe de centrage et à l'axe de référence, chaque aimant se prolonge parallèlement à ce troisième axe, et les bobines et leurs noyaux font parties de séries linéaires de bobines et de noyaux assurant avec les aimants allongés un centrage du corps mobile, parallèlement à l'axe de centrage, en plusieurs emplacements le long de ce troisième axe. De manière préférée ce corps mobile comporte un barreau, allongé selon ce troisième axe, disposé à l'intérieur dudit autre corps. De manière préférée ce barreau comporte des saillies latérales en créneau en regard de la tranche des plaques ferromagnétiques enserrant les aimants et les noyaux des bobines. De la sorte le palier assure un centrage magnétique passif selon l'axe de référence et un centrage actif selon l'axe de centrage.

L'axe de référence est de préférence vertical.

La commande du centrage magnétique actif intervenant dans un palier selon l'invention peut être effectuée par tout moyen connu et le décalage à partir duquel on détermine le courant d'activation appliqué aux bobines, montées en série ou en parallèle, peut être au choix détecté par un détecteur de position, ou de manière préférée par un détecteur de vitesse (voire même par un détecteur d'accélération).

D'autre part l'élément mobile est entraîné en mouvement par rapport audit autre corps, qu'il s'agisse d'un mouvement linéaire ou d'une rotation, par des moyens de tout type connu, par exemple des moteurs magnétiques linéaires (par exemple pas à pas) ou des moteurs magnétiques d'entrainement en rotation tels que décrits notamment dans les brevets analysés ci-dessus.

Les objets, caractéristiques et avantages de l'invention ressortent de la description qui suit, donnée à titre d'exemple préféré et non limitatif en regard des dessins annexés sur lesquels :

— la figure 1 est une vue schématique de principe, en coupe selon un plan contenant un axe de référence Z-Z, d'un palier magnétique conforme à l'invention, dans une version de base à un seul axe de centrage magnétique actif ;

— les figures 2 et 3 représentent conjointement une demi-vue en perspective, avec arrachement partiel, d'un autre palier magnétique selon l'invention, à deux axes croisés de centrage, pour la suspension magnétique d'un corps tournant, la figure 3 montrant une variante de la figure 2 dans laquelle le corps mobile ne comporte pas de saillies en créneau ;

— les figures 4 et 5 sont des vues schématiques représentant des variantes de la figure 1 ;

— la figure 6 est une vue en coupe du dispositif de la figure 4 selon la ligne IV-IV de cette figure 4 ;

— la figure 7 est une demi-vue en coupe décrivant une autre variante de la figure 1 ;

— la figure 8 est une vue partielle en perspective, avec arrachement partiel, d'un autre palier magnétique conforme à l'invention à au moins deux axes parallèles de centrage, assurant la suspension magnétique d'un barreau allongé mobile en translation perpendiculairement à l'axe de référence et à l'axe de centrage ; et

— la figure 9 est une vue schématique en coupe d'un palier selon une variante de la figure 8.

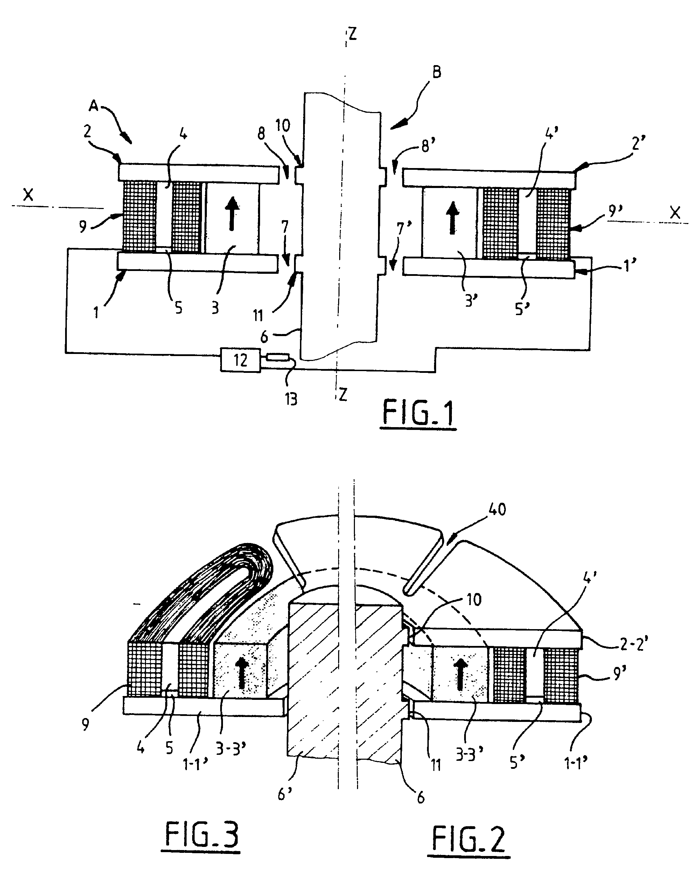

La figure 1 décrit de manière schématique une version de base d'un palier selon l'invention adapté à centrer un corps mobile B par rapport à un autre corps A selon un axe de centrage X-X perpendiculaire à un axe de référence Z-Z.

Pour la suite de la description, par commodité, on admettra que le corps A constitue un stator fixe et rigide, intégrant les éléments fixes de détection et d'entraînement ainsi que les circuits électriques nécessaires au bon fonctionnement du palier.

La pièce B comporte au moins en regard de la pièce A, une pièce polaire 6 en un matériau ferromagnétique (de tout type connu).

Le palier élémentaire de la figure 1 se décompose en deux parties sensiblement symétriques de part et d'autre d'un plan perpendiculaire à l'axe X-X et contenant l'axe de référence. Les mêmes références sont utilisées pour ces deux parties, avec adjonction d'un indice pour distinguer la partie droite de la partie gauche de cette figure 1.

La partie gauche du palier de la figure 1 comporte deux plaques ferromagnétiques 1 et 2 (en tout matériau ferromagnétique connu) parallèles à l'axe X-X, entre lesquelles est enserré un aimant permanent 3 aimanté parallèlement à l'axe de référence Z-Z. Entre ces plaques est également enserré un noyau ferromagnétique 4 parallèle à l'axe Z-Z autour duquel est enroulée une bobine 9. De manière préférée une cale non ferromagnétique statique 5 est ménagée entre le noyau 4 et l'une des plaques ferromagnétiques, ici la plaque 1, en vue de constituer un entrefer. Des entrefers 7 et 8 sont ménagés entre les tranches des plaques ferromagnétiques 1 et 2 et la pièce polaire 6 du corps mobile B. Cette pièce polaire 6 est avantageusement munie de saillies en créneaux 10 et 11 de même épaisseur et de même écartement que les plaques 1 et 2, en regard des tranches de ces dernières.

Les figures 2 et 3 ne diffèrent que par la présence ou l'absence, respectivement, de telles dents en saillie 10, 11. Elles décrivent un cas particulier dans lequel le corps mobile B est un rotor adapté à tourner autour de l'axe de référence Z-Z.

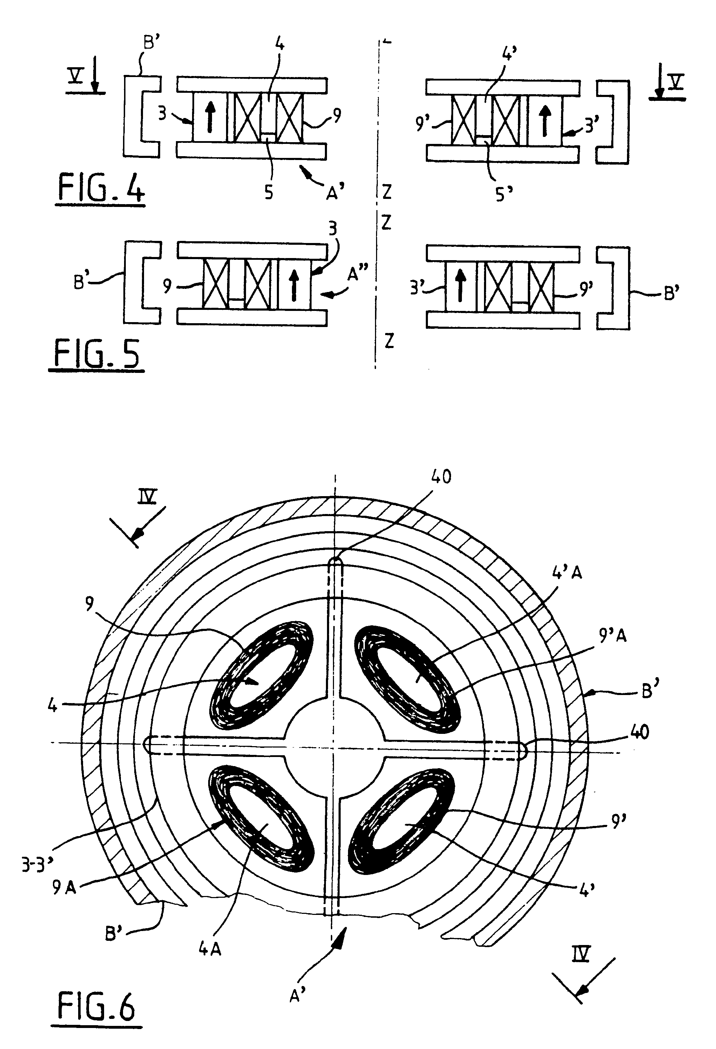

Un palier élémentaire du type décrit à la figure 1 est prévu selon chacun de deux axes perpendiculaires de centrage, eux-mêmes perpendiculaires à l'axe de référence Z-Z. Ces deux paliers à un axe de centrage constituent conjointement un palier plus complexe à deux axes de centrage. Dans ce palier les aimants 3 et 3' de la figure 1, font partie d'un aimant annulaire unique 3-3' aimanté axialement enserré entre deux disques ferromagnétiques 1-1' et 2-2' évidés en leur centre. Les noyaux 4 et 4' font par contre partie d'une série annulaire de noyaux disjoints, à chaque axe de centrage correspondant une paire de noyaux 4, 4' ; 4A, 4'A diamétralement opposés et une paire de bobines 9A, 9'A ; 9 et 9' (ces références avec un "A" n'apparaissent que sur la figure 6).

Les phénomènes magnétiques de centrage vont maintenant être décrits à propos de la partie gauche de la figure 1, étant précisé qu'on peut déduire immédiatement les phénomènes qui interviennent dans la partie droite de cette figure ainsi que selon le deuxième axe de centrage indiqué aux figures 2 et 3.

L'aimant 3 crée un champ magnétique axial qui, dans la plaque ferromagnétique 2, se sépare en deux flux se refermant sur eux-mêmes, d'une part, à droite, à travers l'entrefer 8, la pièce ferromagnétique 6, l'entrefer 7, et la plaque 1 jusqu'à la partie basse dudit aimant et, d'autre part, à gauche à travers le noyau de bobine 4 et l'entrefer statique 5. L'intérêt de cet entrefer statique 5 est d'éviter que le flux généré par l'aimant passe en quasi-totalité par le noyau 4 au détriment des entrefers 7 et 8. Cet entrefer présente de préférence une résistance magnétique du même ordre de grandeur que celle des entrefers précités.

Revenant à la figure 1 dans son ensemble, il apparaît que les champs magnétiques dans les entrefers 7 et 7', 8 et 8', créent des forces en opposition. Il existe en conséquence une position d'équilibre instable pour laquelle les entrefers précités sont de mêmes dimensions. Tout déplacement du corps B parallèlement à l'axe X-X génère sur ce dernier une force radiale, déterminée par la différence de valeur entre les entrefers 7-8 et 7'-8', que l'on appelle "raideur radiale".

Les bobines 9-9', montées en série ou en parallèle de toute manière connue, sont alimentées par un courant électrique déterminé de manière classique à partir de l'écart entre le corps mobile B et sa position d'équilibre instable ou, de préférence, à partir de sa vitesse de déplacement parallèlement à l'axe X-X. Ce courant permet de créer un champ magnétique qui vient s'opposer ou s'ajouter, selon le lieu, à celui créé par l'aimant 3.

Ainsi le courant qui passe dans les bobines, déterminé par un circuit de commande 12 à partir d'un capteur 13 de position, de vitesse ou d'accélération la pièce 6 va permettre, par asservissement de piloter la position radiale de la pièce 6 par rapport à la position de l'ensemble des pièces fixes du palier, rendant ainsi le système stable.

Ce raisonnement pour les centrages passif et actif complémentaires s'applique de manière identique pour le fonctionnement et le pilotage des autres axes radiaux actifs.

L'intérêt de ce palier magnétique à deux axes actifs est de permettre la suspension magnétique d'un arbre ou d'un cylindre pour lequel la translation et le basculement par rapport à l'axe géométrique doit être contrôlé (cf. figure 2). Les dents 10 et 11, qui sont par exemple constituées par des saillies annulaires parallèles, assurent en effet un centrage magnétique passif selon l'axe Z-Z. Pour augmenter la raideur de ce centrage les dents 10 et 11 et les tranches des plaques ferromagnétiques sont par exemple de section à créneaux multiples.

Le système permet d'assurer le guidage d'un cylindre à travers une paroi magnétique, lorsque celui-ci exempt de toute dent 10 ou 11, est adapté à se déplacer en translation selon Z-Z (cf. figure 3).

En effet si l'on supprime les dents 10 et 11 de la pièce polaire 6 de la figure 2, ainsi que cela est représenté à la figure 3 (pièce polaire 6'), on obtient un dispositif dont l'axe perpendiculaire au plan de suspension est libre. Cet axe peut alors être stable par tous moyens annexes dont les raideurs radiales ne viennent pas perturber la stabilité du dispositif dans le plan de suspension : exemple moteur linéaire sans contact.

Le nombre d'axes de pilotage dans le plan de suspension peut être multiplié autant de fois qu'on le veut ainsi que le nombre de bobines par axe.

Les figures 4 et 6, et 5, décrivent un palier à axes de centrage croisés de même structure générale que celui de la figure 2, à ceci près que le corps B' est ici une couronne adaptée à tourner autour du corps A' ou A" fixe, avec également deux axes perpendiculaires de centrage magnétique actif.

De manière préférée ainsi qu'il ressort des figures 1 et 4, l'aimant 3 ou 3' de chaque partie de palier est disposé entre le noyau 4 ou 4' de la bobine 9 ou 9' et le corps mobile B'. Toutefois à titre de variante, on peut également disposer la bobine entre l'aimant et le corps mobile comme cela est représenté à la figure 5.

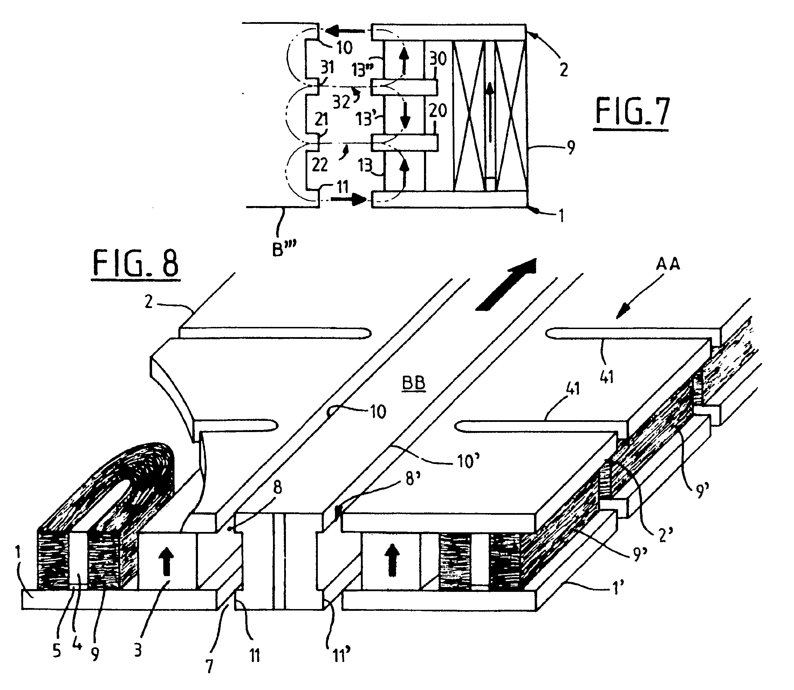

La figure 7 montre une variante de la figure 1 dans laquelle l'aimant 3 ou 3′ est remplacé par une pile d'aimants superposés en nombre impair 13-13′-13″ dont les sens d'aimantation alternent et qui sont séparés par des plaques ferromagnétiques intermédiaires 20 et 30, tandis que la pièce mobile B‴ comporte, entre les dents en saillie 10 et 11, des dents intermédiaires 21 et 31 disposées en regard de la tranche des plaques intermédiaires 20 et 30 en sorte de déterminer des entrefers intermédiaires 22 et 32. Cette disposition permet d'augmenter la raideur radiale du palier sans avoir à multiplier le nombre de bobines 9 et 9′...

Selon une autre variante (non représentée) on augmente le nombre de bobines par axe de centrage, ce qui permet d'augmenter l'efficacité du centrage magnétique actif pour un même volume de palier, de réduire la tension d'alimentation du circuit de commande de ces bobines, et permet une fabrication plus aisée des bobines dans le cas de paliers de grand diamètre : il est en effet plus facile de bobiner plusieurs bobines sur des noyaux sensiblement rectilignes disposés en cercle que de bobiner une plus grande bobine unique sur un noyau allongé incurvé en "haricot".

Les figures 1 à 7 décrivent des paliers comportant deux axes perpendiculaires de centrage magnétique actif. Le nombre d'axes de centrage croisés peut bien sûr être supérieur. De plus les bobines associées à un même axe de centrage peuvent être commandées indépendamment l'une de l'autre. En variante, l'une seulement de celles-ci est alimentée à un moment quelconque donné.

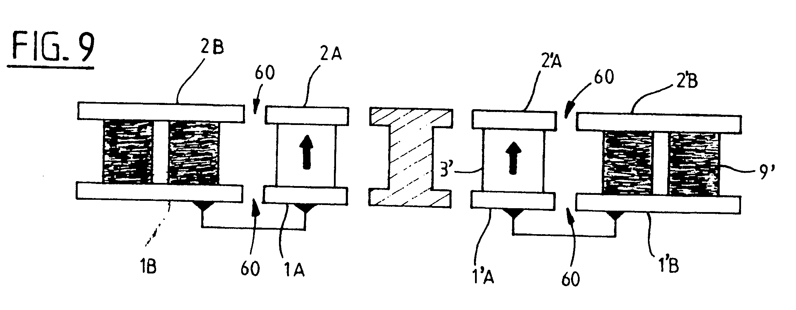

La figure 8 décrit un autre palier conforme à l'invention adapté au centrage d'un barreau adapté à être déplacé en translation selon un axe perpendiculaire à l'axe de centrage X-X et à l'axe de référence Z-Z. Ce palier est formé d'un alignement d'au moins deux paliers unitaires tels que décrits à la figure 1 et disposés côte à côte, adaptés à agir sur le barreau en des zones successives de sa longueur. Ce palier est ainsi formé, de part et d'autre du barreau central BB, de deux aimants allongés 3 et 3′ enserrés entre des plaques allongées 1 et 2, ou 1′ et 2′. Parallèlement à ces aimants sont disposés des alignements de noyaux 4 ou 4′, complétés par des cales statiques 5 ou 5′, entourés par des bobines 9 ou 9′.

La figure 9 décrit de manière schématique une variante de la figure 8 dans laquelle les plaques 1 et 2 ou 1′ et 2′, entre lesquelles sont enserrés les aimants et les noyaux des bobines, se décomposent elles-mêmes en des plaques 1A-1B, 2A, 2B, mécaniquement liées, enserrant respectivement, soit les noyaux, soit les aimants et séparées par des entrefers 60 fixes faisant le pendant des entrefers 7 et 8.

On notera que sur les figures 2 et 8, des fentes 40 ou 41 sont ménagées dans les plaques ferromagnétiques 1 et 2 ou 1′ et 2′, sauf à proximité de la pièce mobile, en sorte d'assurer une séparation magnétique des champs générés par des bobines adjacentes.

On appréciera que dans le mode de réalisation de la figure 8, grâce aux saillies 10, 11, 10′, 11′ que présente le barreau à proximité de ses arêtes longitudinales, il y a centrage magnétique actif selon un axe parallèle aux plaques ferromagnétiques et centrage magnétique passif parallèlement à l'axe de référence.

De manière préférée l'axe de référence est un axe vertical, de sorte que la gravité est compensée par le centrage passif effectué par les nervures 10′ et 11′.

L'invention se prête à une très large gamme d'application industrielles, notamment :

— têtes d'enregistreur magnétique à haute performance à plus de 250 M bits (vitesse de rotation élevée, contrôle de positionnement de la tête d'enregistrement),

— pompes cryogéniques — suspension d'un cylindre compresseur à l'intérieur d'une enveloppe dont on assure le jeu d'étanchéité : possibilité d'un nombre de cycles élevé, absence d'usure, pas de pollution à l'intérieur de l'enveloppe,

— pompe turbomoléculaire (possibilité de fonctionnement en atmosphère corrosive, vitesse de rotation élevée, absence d'usure des paliers, absence de pollution).

— matériel médical

Le palier unitaire de la figure 1 se prête à de multiples combinaisons, en ayant des axes de référence confondus (figures 2, 3, 5 et 8) ou distincts, par exemple perpendiculaires. D'autre part le barreau central de la figure 8 peut être dissocié en deux pièces polaires mécaniquement solidaires mais distinctes, disposées entre les éléments du palier, ou de part et d'autre de ceux-ci.

## Revendications

1. Palier magnétique pour le centrage magnétiquement actif selon au moins un axe de centrage (X-X), perpendiculaire à un axe de référence (Z-Z), d'un corps (B, B′, B″, BB) mobile par rapport à un autre corps (A, A′, AA), comportant de chaque côté d'un plan de symétrie perpendiculaire à l'axe de centrage et contenant l'axe de référence :

— au moins un aimant permanent (3, 3′ ; 3-3′) aimanté parallèlement à l'axe de référence,

— au moins une bobine (9, 9′) enroulée autour d'un noyau ferromagnétique (4, 4′) orienté parallèlement à l'axe de référence, et

— des pièces ferromagnétiques adaptées à refermer sur eux-mêmes des flux générés par l'aimant et la bobine au travers d'entrefers séparant, le long de l'axe de centrage, ladite pièce mobile par rapport audit autre corps,

ce palier comportant en outre un circuit électrique de commande (12) comportant un détecteur (13) sensible à un décalage du corps mobile par rapport audit autre corps selon cet axe de centrage et adapté à fournir à au moins l'une des bobines un courant tendant à compenser ce décalage, étant caractérisé en ce que :

— l'aimant (3, 3') et le noyau (4, 4') autour duquel est enroulée la bobine (9, 9') sont enserrés entre deux plaques ferromagnétiques (1, 2 ; 1', 2' ; 1-1', 2-2') portées par ledit autre corps tandis que le corps mobile porte une pièce ferromagnétique polaire (6, 6') adaptée à refermer sur eux-mêmes au travers desdits entrefers (7, 8 ; 7', 8') les flux magnétiques circulant dans les plaques ferromagnétiques,

— une cale statique non-ferromagnétique (5, 5') formant entrefer est disposée entre le noyau ferromagnétique (4, 4') de la bobine et l'une (2, 2') des plaques ferromagnétiques l'enserrant.

2. Palier magnétique selon la revendication 1, caractérisé en ce que la pièce polaire (6) du corps mobile (B) comporte des saillies en créneau (10, 11) de même épaisseur et de même écartement que les plaques ferromagnétiques enserrant l'aimant et le noyau de la bobine, en vue d'un centrage magnétique passif du corps mobile par rapport à l'autre corps selon l'axe de référence.

3. Palier magnétique selon la revendication 2, caractérisé en ce que ledit aimant se décompose en une pile d'aimants superposés en nombre impair (13, 13', 13") dont les sens d'aimantation alternent et qui sont séparés par des plaques ferromagnétiques intermédiaires (20 et 30) et en ce que la pièce polaire (6) du corps mobile comporte des saillies intermédiaires en créneau (21, 31) disposées en regard de la tranche de ces plaques ferromagnétiques intermédiaires en sorte de déterminer des entrefers intermédiaires (22, 32).

4. Palier magnétique selon l'une quelconque des revendications 1 à 3, caractérisé en ce que, parallèlement à l'axe de centrage, l'aimant (3, 3') est disposé entre le noyau ferromagnétique portant la bobine et la pièce polaire du corps mobile.

5. Palier magnétique selon l'une quelconque des revendications 1 à 4, caractérisé en ce que les plaques ferromagnétiques sont en deux parties (1A, 1B, 2A, 2B...) mécaniquement liées, enserrant respectivement le noyau et l'aimant, et séparées par des entrefers (60).

6. Palier magnétique selon l'une quelconque des revendications 1 à 5, caractérisé en ce que l'axe de référence constitue un axe de rotation pour le corps mobile (B, B'), l'aimant faisant partie d'une couronne aimantée (3-3') centrée sur cet axe, et au moins deux autres bobines (9A, 9'A), entourant deux autres noyaux (4A, 4'A) sont disposées selon un troisième axe perpendiculaire à l'axe de référence en vue du centrage magnétique actif du corps mobile selon ce troisième axe.

7. Palier magnétique selon la revendication 6, caractérisé en ce que le corps mobile comporte un arbre disposé à l'intérieur de l'autre corps.

8. Palier magnétique selon la revendication 6, caractérisé en ce que le corps mobile comporte une couronne (B') entourant l'autre corps.

9. Palier magnétique selon l'une quelconque des revendications 1 à 5, caractérisé en ce que le corps mobile (BB) est mobile en translation perpendiculairement à l'axe de centrage et à l'axe de référence, chaque aimant (3, 3') se prolongeant parallèlement à ce troisième axe, et les bobines et leurs noyaux faisant partie de séries linéaires de bobines et de noyaux assurant avec les aimants un centrage du corps mobile parallèlement à l'axe de centrage en plusieurs emplacements le long dudit troisième axe.

10. Palier magnétique selon la revendication 9, caractérisé en ce que le corps mobile comporte un barreau (BB), allongé selon ce troisième axe à l'intérieur de l'autre corps (AA).

11. Palier magnétique selon la revendication 10, caractérisé en ce que le corps mobile comporte des saillies en créneau (10, 11) de même épaisseur et de même écartement que les plaques ferromagnétiques enserrant l'aimant et le noyau de la bobine, en vue d'un centrage magnétique passif du corps mobile par rapport à l'autre corps selon l'axe de référence.

**Patentansprüche**

1. Magnetische Lagerung zur aktiven magnetischen Zentrierung eines in bezug auf einen anderen Körper (A, A', AA) beweglichen Körpers (B, B', B", BB) entsprechend mindestens einer zu einer Bezugsachse (Z-Z) senkrechten Zentrierachse (X-X), welche Lagerung auf jeder Seite einer zu Zentrierachse senkrechten und die Bezugsachse enthaltenden Symmetrieebene

— mindestens einen Permanentmagneten (3, 3'; 3-3') aufweist, der parallel zur Bezugsachse magnetisiert ist,

— mindestens eine Spule (9, 9'), die um einen ferromagnetischen, parallel zur Bezugsachse ausgerichteten Kern (4, 4') gewickelt ist,

— ferromagnetische Elemente, die so ausgebildet sind, daß sich die vom Magneten und der Spule durch die Luftspalte, die das bewegliche Element in bezug auf den genannten anderen Körper entlang der Zentrierachse trennen, hindurch erzeugten Magnetflüsse über ihnen wieder schließen,

wobei die Lagerung im übrigen einen elektrischen Steuerkreis (12) aufweist, der einen Detektor (13) umfaßt, der auf eine Verschiebung des beweglichen Körpers in bezug auf den genannten anderen Körper entsprechend dieser Zentrierachse reagiert, und der so ausgebildet ist, daß er wenigstens einer dieser Spulen einen Strom liefert, der trachtet, diese Verschiebung auszugleichen, dadurch gekennzeichnet, daß

— der Magnet (3, 3') und der Kern (4, 4'), um den die Spule (9, 9') gewickelt ist, zwischen zwei ferromagnetischen Platten (1, 2 ; 1', 2' ; 1-1', 2-2') eingeschlossen sind, die von dem genannten anderen Körper getragen werden, während der bewegliche Körper ein ferromagnetisches Polarelement (6, 6') trägt, das so ausgebildet ist, daß sich auf ihm über die Luftspalte (7, 8 ; 7', 8') die in den ferromagnetischen Platten zirkulierenden Magnetflüsse wieder schließen ;

— zwischen dem ferromagnetischen Kern (4, 4') der Spule und einer der sie einschließenden ferromagnetischen Platten (2, 2') ein einen Luftspalt bildender statischer nicht-ferromagnetischer Keil (5, 5') vorgesehen ist.

2. Magnetische Lagerung nach Anspruch 1, dadurch gekennzeichnet, daß das Polarelement (6) des beweglichen Körpers (B) zur Erreichung einer der Bezugsachse entsprechenden passiven magnetischen Zentrierung des beweglichen Körpers in bezug auf den anderen Körper zinnenartige Vorsprünge (10, 11) aufweist, die die gleiche Dicke und den gleichen Abstand aufweisen, wie die den Magneten und den Spulenkern einschließenden ferromagnetischen Platten.

3. Magnetische Lagerung nach Anspruch 2, dadurch gekennzeichnet, daß der Magnet aus einem Stapel von übereinander angeordneten Magneten (13, 13', 13'') ungerader Zahl zusammengesetzt ist, deren Magnetisierungsrichtung abwechselt, und die durch ferromagnetische Zwischenplatten (20 und 30) voneinander getrennt sind, und daß das Polarelement (6) des beweglichen Körpers zinnenartige Zwischenvorsprünge (21, 31) aufweist, die gegenüber der Kante dieser ferromagnetischen Zwischenplatten vorgesehen sind, um zwischenliegende Luftspalte (22, 32) zu bilden.

4. Magnetische Lagerung nach einem der Ansprüche 1 bis 3, dadurch gekennzeichnet, daß der Magnet (3, 3') parallel zur Zentrierachse zwischen dem die Spule tragenden ferromagnetischen Kern und dem Polarelement des beweglichen Körpers angeordnet ist.

5. Magnetische Lagerung nach einem der Ansprüche 1 bis 4, dadurch gekennzeichnet, daß die ferromagnetischen Platten aus zwei mechanisch miteinander verbundenen Teilen (1A, 1B, 2A, 2B...) gebildet sind die den Kern bzw. den Magneten einschließen, und durch Luftspalte (60) voneinander getrennt sind.

6. Magnetische Lagerung nach einem der Ansprüche 1 bis 5, dadurch gekennzeichnet, daß die Bezugsachse eine Rotationsachse für den beweglichen Körper (B, B') bildet, wobei der Magnet Teil eines auf diese Achse zentrierten magnetisierten Kranzes (3-3') ist, und daß wenigstens zwei andere Spulen (9A, 9'A), die zwei andere Kerne (4A, 4'A) umgeben, entsprechend einer dritten Achse angeordnet sind, die zur Bezugsachse senkrecht steht, um eine aktive magnetische Zentrierung des beweglichen Körpers entsprechend dieser dritten Achse zu erreichen.

7. Magnetische Lagerung nach Anspruch 6, dadurch gekennzeichnet, daß der bewegliche Körper eine im Inneren des anderen Körpers angeordnete Achse aufweist.

8. Magnetische Lagerung nach Anspruch 6, dadurch gekennzeichnet, daß der bewegliche Körper einen den anderen Körper umgebenden Kranz (B') aufweist.

9. Magnetische Lagerung nach einem der Ansprüche 1 bis 5, dadurch gekennzeichnet, daß der bewegliche Körper (BB) zur Zentrierachse und zur Bezugssachse senkrecht verschiebbar ist, wobei sich jeder Magnet (3, 3') parallel zu dieser dritten Achse erstreckt, und die Spulen und ihre Kerne Teile von linearen Spulenreihen und Kernen bilden und mit den Magneten eine Zentrierung des beweglichen Körpers parallel zur Zentrierachse an mehreren Stellen entlang der genannten dritten Achse gewährleisten.

10. Magnetische Lagerung nach Anspruch 9, dadurch gekennzeichnet, daß der bewegliche Körper eine Stange (BB) aufweist, die entlang dieser dritten Achse in das Innere des anderen Körpers (AA) verlängert ist.

11. Magnetische Lagerung nach Anspruch 10, dadurch gekennzeichnet, daß der bewegliche Körper für die der Bezugsachse entsprechende passive magnetische Zentrierung des beweglichen Körpers in bezug auf den anderen Körper zinnenartige Vorsprünge (10, 11) aufweist, die die gleiche Dicke und den gleichen Abstand aufweisen wie die den Magneten und den Spulenkern einschließenden ferromagnetischen Platten.

**Claims**

1. A magnetic bearing, for active magnetic centering with respect to at least one centering axis (X-X), perpendicular to a reference axis (Z-Z), of a body (B, B', B'', BB) movable relative to another body (A, A', AA), comprising on each side of a plane of symmetry perpendicular to the centering axis and containing the reference axis :

— at least one permanent magnet (3, 3' ; 3-3') magnetized parallel to the reference axis,

— at least one coil (9, 9') wound around a ferromagnetic core (4, 4′) orientated parallel to the reference axis, and

— ferromagnetic elements adapted to provide a closed magnetic path for magnetic fluxes produced by the magnet and the coil through air gaps separating, along the centering axis, the said movable body from the said other body,

this bearing also comprising an electrical control circuit (12) comprising a sensor (13) responsive to movement of the movable body relative to the other body along the centering axis and adapted to supply to at least one of the coils a current tending to correct such relative movement, characterized in that :

— the magnet (3, 3′) and the core (4, 4′) around which the coil (9, 9′) is wound are clamped between two ferromagnetic plates (1, 2 ; 1′, 2′ ; 1-1′, 2-2′) carried by the said other body whereas the movable body carries a ferromagnetic pole piece (6, 6′) adapted to provide a closed magnetic path through the said air gaps (7, 8 ; 7′, 8′) for magnetic fluxes circulating in the ferromagnetic plates,

— a static non-ferromagnetic spacer (5, 5′) forming an air gap is disposed between the ferromagnetic core (4, 4′) of the coil and one of the said ferromagnetic plates (2, 2′) between which it is clamped.

2. A magnetic bearing according to claim 1, characterized in that the pole piece (6) of the movable body (B) comprises crenellations (10, 11) having the same thickness and the same spacing between them as the ferromagnetic plates clamping the magnet and the core of the coil in order to provide passive magnetic centering of the movable body relative to the other body with respect to the reference axis.

3. A magnetic bearing according to claim 2, characterized in that the said magnet comprises an odd number of magnets (13, 13′, 13″) superposed in a stack with their directions of magnetization alternating and which are separated by intermediate ferromagnetic plates (20 and 30), and in that the pole piece (6) of the movable body comprises intermediate crenellations (21, 31) disposed facing the edges of the intermediate ferromagnetic plates so as to define intermediate air gaps (22, 32).

4. A magnetic bearing according to any one of claims 1 to 3, characterized in that the magnet (3, 3′) is disposed, parallel to the centering axis, between the ferromagnetic core carrying the coil and the pole piece of the movable body.

5. A magnetic bearing according to any one of claims 1 to 4, characterized in that the ferromagnetic plates are in two parts (1A, 1B, 2A, 2B...) mechanically coupled together clamping respectively the core and the coil and separated by air gaps (60).

6. A magnetic bearing according to any one of claims 1 to 5, characterized in that the reference axis constitutes a rotation axis for the movable body (B, B′), the magnet forms part of a magnetized ring (3-3′) centered on this axis, and at least two other coils (9A, 9′A) surrounding two other cores (4A, 4′A) are disposed on a third axis perpendicular to the reference axis in order to provide active magnetic centering of the movable body with respect to the third axis.

7. A magnetic bearing according to claim 6, characterized in that the movable body comprises a shaft disposed inside the other body.

8. A magnetic bearing according to claim 6, characterized in that the movable body comprises a ring (B′) surrounding the other body.

9. A magnetic bearing according to any one of claims 1 to 5, characterized in that the movable body (BB) is movable in translation perpendicularly to the centering and reference axes, each magnet (3, 3′) extending parallel to the third axis, and the coils and their cores forming parts of linear series of coils and cores which together with the magnets provide centering of the movable body parallel to the centering axis at a plurality of locations along the said third axis.

10. A magnetic bearing according to claim 9, characterized in that the movable body comprises a bar (BB) extending along the third axis inside the other body (AA).

11. A magnetic bearing according to claim 10, characterized in that the movable body comprises crenellations (10, 11) having the same thickness and the same spacing between them as the ferromagnetic plates clamping the magnet and the core of the coil in order to provide passive magnetic centering of the movable body relative to the other body with respect to the reference axis.

FIG.1

FIG.3          FIG.2

FIG.4

FIG.5

FIG.6

FIG.7

FIG.8

FIG. 9